# EUROPÄISCHE PATENTSCHRIFT

(11) **EP 3 649 857 B1**
(45) Veröffentlichungstag und Bekanntmachung des Hinweises auf die Patenterteilung: **25.08.2021**
(21) Anmeldenummer: 19401041.9
(22) Anmeldetag: 18.10.2019
(51) Int. Cl.: A01M 7/00

(54) **LANDWIRTSCHAFTLICHES SPRITZGERÄT**
AGRICULTURAL SPRAYER
APPAREIL DE PULVÉRISATION AGRICOLE

(30) Priorität: 25.10.2018 DE 102018126586
(43) Veröffentlichungstag der Anmeldung: 13.05.2020
(73) Patentinhaber: Amazonen-Werke H. Dreyer SE & Co. KG, 49205 Hasbergen (DE)
(72) Erfinder: Austermann, Stefan, 48291 Telgte (DE); Dreyer, Justus, 49078 Osnabrück (DE); Ehlen, Volker, 49205 Hasbergen (DE); Johannaber, Stefan Jan, 49536 Lienen (DE); Kiefer, Stefan, 49074 Osnabrück (DE); Holtkötter, Christian, 33775 Versmold (DE); Klemann, Timo, 49191 Belm (DE); Hilbert, Florenz, 48282 Emsdetten (DE)

(56) Entgegenhaltungen:
- EP-A2- 2 022 329
- US-A1- 2017 359 943
- US-A1- 2018 243 771

## Beschreibung

Die Erfindung betrifft ein Verfahren zum Ausbringen von Spritzflüssigkeit nach dem Oberbegriff des Patentanspruchs 1.

Ein derartiges Verfahren ist in US 2018/0243771 A1 offenbart.

Bei der Ausbringung von Spritzflüssigkeit auf eine landwirtschaftliche Nutzfläche ist es von Vorteil, wenn die Spritzflüssigkeit in die unmittelbare Umgebung der jeweiligen Pflanzen auf der landwirtschaftlichen Nutzfläche abgegeben wird. Da die Aussaat einer Vielzahl von landwirtschaftlichen Nutzpflanzen entlang von Saatreihen erfolgt, bilden sich auf der landwirtschaftlichen Nutzfläche während der Wachstumswachse der Nutzpflanzen Pflanzenreihen aus.

Eine besonders effektive und wirksame Ausbringung von Spritzflüssigkeit kann also dadurch erreicht werden, dass die Spritzflüssigkeitsausbringung reihenbezogen erfolgt, sodass die Spritzflüssigkeit im Wesentlichen entlang von Ausbringstreifen ausgebracht wird, wobei die Ausbringstreifen entlang von Pflanzenreihen verlaufen.

Im Stand der Technik sind bereits Methoden bekannt, mit welchen Pflanzenreihen auf landwirtschaftlichen Nutzflächen erfasst werden können. Ein entsprechendes Verfahren ist beispielsweise aus der Druckschrift DE 196 42 439 C1 bekannt.

Bei der Ausbringung von Spritzflüssigkeit ist jedoch zu berücksichtigen, dass die Arbeitsbreite von Spritzgestängen üblicherweise die Arbeitsbreite von Sämaschinen um ein Vielfaches übersteigt und dass es bei der Saatgutausbringung aufgrund von unpräzisen Anschlussfahrten zu unregelmäßigen Abständen der einzelnen Saatgutreihen zueinander kommt. Die sich ergebenden Pflanzenreihen verlaufen somit üblicherweise zwar im Wesentlichen parallel zueinander, wobei der Abstand einzelner Pflanzenreihen zueinander variieren kann. Mit den im Stand der Technik bekannten starren Düsen-Anordnungen kann keine geeignete Anpassung an den Pflanzenreihenversatz umgesetzt werden. Die pflanzenreihenbezogene Spritzflüssigkeitsausbringung erfolgt somit vergleichsweise unpräzise, sodass die Wirkung der ausgebrachten Spritzflüssigkeit nicht selten erheblich beeinträchtigt wird.

Die der Erfindung zugrundeliegende Aufgabe besteht somit darin, die Präzision bei der reihenbezogenen Ausbringung von Spritzflüssigkeit zu verbessern.

Es wird ein landwirtschaftliches Spritzgerät der eingangs genannten Art vorgeschlagen, wobei das landwirtschaftliche Spritzgerät eine Steuerungseinrichtung aufweist, welche dazu eingerichtet ist, die Verstelleinrichtung in Abhängigkeit der durch die Erfassungseinrichtung erfassten Pflanzenreihen auf der landwirtschaftlichen Nutzfläche während des Ausbringvorgangs zu steuern.

Die Erfindung macht sich die Erkenntnis zunutze, dass durch die Steuerung der Verstelleinrichtung in Abhängigkeit der durch die Erfassungseinrichtung erfassten Pflanzenreihen der Auftreffbereich eines Ausbringelements oder die Auftreffbereiche von mehreren Ausbringelementen an Unregelmäßigkeiten in der Beabstandung der Pflanzenreihen angepasst werden können. Somit kann eine präzise reihenbezogene Ausbringung von Spritzflüssigkeit erfolgen, auch wenn benachbarte Pflanzenreihen auf der landwirtschaftlichen Nutzfläche teilweise unterschiedliche Abstände voneinander aufweisen.

Die Steuerungseinrichtung kann dazu eingerichtet sein, die Verstelleinrichtung derart zu steuern, dass die Auftreffbereiche der von einer oder mehreren Ausbringelementen abgegebenen Spritzflüssigkeit in den Pflanzenreihen aufweisenden Reihenbereichen der landwirtschaftlichen Nutzfläche liegen. Alternativ oder zusätzlich kann die Steuerungseinrichtung dazu eingerichtet sein, die Verstelleinrichtung derart zu steuern, dass die Auftreffbereiche der von einer oder mehreren Ausbringelementen abgegebenen Spritzflüssigkeit in Zwischenbereichen liegen, welche zwischen benachbarten Pflanzenreihen verlaufen. Somit kann Spritzflüssigkeit gezielt auf die Reihenbereiche und/oder die zwischen den Reihenbereichen verlaufenden Zwischenbereiche ausgebracht werden.

In einer bevorzugten Ausführungsform des landwirtschaftlichen Spritzgeräts weist die Verstelleinrichtung eine oder mehrere Positioniereinrichtungen auf, mittels welchen jeweils die Position von einem oder mehreren Ausbringelementen an dem Spritzgestänge veränderbar ist. Vorzugsweise ist mittels mehrerer Positioniereinrichtungen eine Einzelpositionierung von einzelnen Ausbringelementen umsetzbar. Vorzugsweise sind sämtliche Ausbringelemente jeweils mittels einer Positioniereinrichtung unabhängig von anderen Ausbringelementen positionierbar. Alternativ oder zusätzlich kann eine Gruppenpositionierung von mehreren Ausbringelementen erfolgen, wobei im Rahmen einer Gruppenpositionierung eine Gruppe von Ausbringelementen gleichzeitig positionierbar ist. Mittels der Positioniereinrichtungen ist vorzugsweise eine Positionsveränderung von einem oder mehreren Ausbringelementen entlang des Spritzgestänges des landwirtschaftlichen Spritzgeräts, also quer zur Fahrtrichtung des landwirtschaftlichen Spritzgeräts, umsetzbar. Alternativ oder zusätzlich kann mittels einer Positioniereinrichtung auch das gesamte Spritzgestänge samt den an dem Spritzgestänge angeordneten Ausbringelementen bewegt werden.

Darüber hinaus ist ein landwirtschaftliches Spritzgerät vorteilhaft, bei welchem die eine oder die mehreren Positioniereinrichtungen jeweils einen Verschiebemechanismus aufweisen, mittels welchem das eine oder die mehreren Ausbringelemente entlang des Spritzgestänges verschiebbar sind. Insbesondere können die jeweiligen Schiebemechanismen eine Verstellschiene aufweisen, welche sich über einen Teilabschnitt des Spritzgestänges quer zur Fahrtrichtung des landwirtschaftlichen Spritzgeräts erstreckt. Vorzugsweise ist ein oder sind mehrere Ausbringelemente an den jeweiligen Verstellschienen befestigt und entlang der Verstellschienen verschiebbar.

In einer anderen Ausführungsform des landwirtschaftlichen Spritzgeräts ist die Steuerungseinrichtung dazu eingerichtet, die eine oder die mehreren Positioniereinrichtungen derart zu steuern, dass einzelne oder mehrere Ausbringelemente während des Ausbringvorgangs jeweils im Wesentlichen vertikal oberhalb einer Pflanzenreihe positioniert sind. Durch die Positionierung einzelner oder mehrerer Ausbringelemente vertikal oberhalb einer Pflanzenreihe kann eine reihenbezogene Ausbringung von Spritzflüssigkeit besonders präzise erfolgen. Alternativ oder zusätzlich kann die Steuerungseinrichtung dazu eingerichtet sein, die eine oder die mehreren Positioniereinrichtungen derart zu steuern, dass einzelne oder mehrere Ausbringelemente während des Ausbringvorgangs jeweils oberhalb und im Wesentlichen mittig zwischen zwei Pflanzenreihen positioniert sind. Durch die Positionierung von einzelnen oder mehreren Ausbringelementen oberhalb und im Wesentlichen mittig zwischen zwei Pflanzenreihen kann eine präzise Ausbringung von Spritzflüssigkeit auf die Zwischenbereiche zwischen den Pflanzenreihen umgesetzt werden. In diesen Zwischenbereichen herrscht regelmäßig ein erhöhter Unkrautdruck, sodass die gezielte Ausbringung von Unkrautbekämpfungsmitteln innerhalb dieser Zwischenbereiche das Wachstumspotential der Nutzpflanzen erheblich steigert.

Außerdem ist ein landwirtschaftliches Spritzgerät vorteilhaft, bei welchem die Steuerungseinrichtung dazu eingerichtet ist, die Verstelleinrichtung derart zu steuern, dass der mittlere Abstand in horizontaler Richtung zwischen den erfassten Pflanzenreihen und den den Pflanzenreihen jeweils zugeordneten Ausbringelementen minimal ist. Insbesondere, wenn die eine oder die mehreren Positioniereinrichtungen keine exakte Positionierung sämtlicher Ausbringelemente oberhalb der Pflanzenreihen erlauben, wird auf diese Weise trotzdem ein akzeptabler Reihenbezug hergestellt. Beispielsweise umfasst das landwirtschaftliche Spritzgerät mehrere Gruppen von Ausbringelementen, wobei die einzelnen Gruppen von Ausbringelementen entlang des Spritzgestänges und somit quer zur Fahrtrichtung des landwirtschaftlichen Spritzgeräts verschiebbar sind. Da die Relativposition einzelner Ausbringelemente einer Gruppe von Ausbringelementen nicht veränderbar ist, ist die exakte Positionierung sämtlicher Ausbringelemente oberhalb einer Pflanzenreihe häufig nicht möglich. Die einzelnen Gruppen von Ausbringelementen werden in diesem Fall derart positioniert, dass der mittlere Abstand in horizontaler Richtung zwischen den erfassten Pflanzenreihen und den den Pflanzenreihen jeweils zugeordneten Ausbringelementen minimal ist. Vorzugsweise ist die Steuerungseinrichtung dazu eingerichtet, eine entsprechende Position für die jeweiligen Gruppen von Ausbringelementen unter Berücksichtigung der Verstellmöglichkeiten und der Relativpositionierung einzelner Ausbringelemente einer Gruppe zueinander zu berechnen.

In einer weiteren Ausführungsform des landwirtschaftlichen Spritzgeräts weist die Verstelleinrichtung eine oder mehrere Schwenkeinrichtungen auf, mittels welchen jeweils die Neigung von einem oder mehreren Ausbringelementen an dem Spritzgestänge veränderbar ist. Durch die eine oder die mehreren Schwenkeinrichtungen kann eine Neigungsanpassung von einzelnen Ausbringelementen erfolgen, beispielsweise derart, dass einzelne Ausbringelemente auf erfasste Pflanzenreihen auf der landwirtschaftlichen Nutzfläche ausgerichtet sind. Alternativ oder zusätzlich kann die Neigungsanpassung auch derart erfolgen, dass Ausbringelemente auf Zwischenbereiche zwischen benachbarten Pflanzenreihen ausgerichtet sind. Ferner kann die eine oder können die mehreren Schwenkeinrichtungen auch dazu eingerichtet sein, die Neigung einer Gruppe von Ausbringelementen anzupassen. Beispielsweise ist eine Gruppe von mehreren Ausbringelementen an einer Trägerstruktur angeordnet, wobei die jeweiligen Schwenkeinrichtungen dazu eingerichtet sind, die Neigung einer Trägerstruktur zu verändern.

Außerdem ist ein landwirtschaftliches Spritzgerät vorteilhaft, bei welchem die Steuerungseinrichtung dazu eingerichtet ist, die eine oder die mehreren Schwenkeinrichtungen derart zu steuern, dass einzelne oder mehrere Ausbringelemente während des Ausbringvorgangs jeweils im Wesentlichen auf eine Pflanzenreihe ausgerichtet sind. Alternativ oder zusätzlich kann die Steuerungseinrichtung dazu eingerichtet sein, die eine oder die mehreren Schwenkeinrichtungen derart zu steuern, dass einzelne oder mehrere Ausbringelemente während des Ausbringvorgangs jeweils auf einen Bereich zwischen zwei Pflanzenreihen ausgerichtet sind. Die eine oder die mehreren Schwenkeinrichtungen können zusätzlich oder alternativ zu der einen oder den mehreren Positioniereinrichtungen vorliegen.

Darüber hinaus ist ein landwirtschaftliches Spritzgerät bevorzugt, bei welchem die Verstelleinrichtung ein oder mehrere Verdreheinrichtungen aufweist, mittels welchen die Drehausrichtung von einem oder mehreren Ausbringelementen an dem Spritzgestänge veränderbar ist. Vorzugsweise ist die eine oder sind die mehreren Dreheinrichtungen dazu eingerichtet, ein oder mehrere Ausbringelemente um die eigene Hochachse zu verdrehen. Insbesondere, wenn Ausbringelemente keinen kegelförmigen Sprühfächer erzeugen, sondern eine gerichtete Flüssigkeitsausbringung umsetzen, kann durch eine Verdrehung der Ausbringelemente um die Hochachse die Ausbringung der Spritzflüssigkeit angepasst werden. Beispielsweise lässt sich durch ein Verdrehen von Ausbringelementen um die eigene Hochachse die Sprühbreite im Auftreffbereich der Flüssigkeit verändern.

In einer alternativen Ausführungsform des landwirtschaftlichen Spritzgeräts weist dieses mehrere mit dem Spritzgestänge verbundene Trägerstrukturen auf, wobei an den Trägerstrukturen jeweils mehrere Ausbringelemente befestigt sind und die Position und/oder Neigung der Trägerstrukturen mittels der Verstelleinrichtung veränderbar ist. Wenn die Ausbringelemente als Spritzdüsen ausgebildet sind, können die Trägerstrukturen Düsenträgereinheiten sein. An entsprechenden Düsenträgereinheiten sind mehrere als Spritzdüsen ausgebildete Ausbringelemente befestigt bzw. angeordnet. Die Ausbringelemente können beweglich oder unbeweglich an den jeweiligen Trägerstrukturen befestigt sein. Wenn die Ausbringelemente unbeweglich an den Trägerstrukturen befestigt sind, kann die Relativposition und/oder die Relativ-Neigung der Ausbringelemente einer Trägerstruktur zueinander nicht verändert werden. Wenn die Ausbringelemente beweglich an der Trägerstruktur befestigt sind, kann die Relativposition und/oder die Relativ-Neigung der Ausbringelemente einer Trägerstruktur zueinander verändert werden.

Bevorzugt ist außerdem ein landwirtschaftliches Spritzgerät, bei welchem mittels der Verstelleinrichtung das Spritzmuster von einer oder mehreren Ausbringelementen veränderbar ist. Beispielsweise umfasst die Verstelleinrichtung unterschiedliche Düsenaufsätze, wobei die unterschiedlichen Düsenaufsätze zur Erzeugung unterschiedlicher Spritzmuster führen. Beispielsweise kann die Verstelleinrichtung auch Durchfluss-Steuereinheiten, beispielsweisen Ventile, aufweisen, mittels welchen die den Ausbringelementen bereitgestellte Flüssigkeitsmenge einstellbar bzw. steuerbar ist.

Es ist außerdem ein landwirtschaftliches Spritzgerät vorteilhaft, bei welchem die Erfassungseinrichtung einen oder mehrere Sensoren und/oder eine oder mehrere Kameras zum Erfassen von Pflanzenreihen umfasst. Der eine oder die mehreren Sensoren und/oder die eine oder die mehreren Kameras sind vorzugsweise an dem Spritzgestänge des landwirtschaftlichen Spritzgeräts angeordnet und/oder befestigt. Insbesondere weist die Steuerungseinrichtung eine Auswerteeinheit auf, welche auf Grundlage der Signale des einen oder der mehreren Sensoren und/oder der Signale der einen oder der mehreren Kameras die Präsenz, die Position und/oder den Verlauf von Pflanzenreihen erfasst.

Die der Erfindung zugrundeliegende Aufgabe wird durch ein Verfahren gemäß Anspruch 1 gelöst. Im Rahmen des erfindungsgemäßen Verfahrens wird die Verstelleinrichtung in Abhängigkeit der durch die Erfassungseinrichtung erfassten Pflanzenreihen auf der landwirtschaftlichen Nutzfläche während des Ausbringvorgangs gesteuert. Die Spritzflüssigkeit kann Pflanzenschutzmittel und/oder Flüssigdünger sein bzw. Pflanzenschutzmittel und/oder Flüssigdünger umfassen. Vorzugsweise wird das erfindungsgemäße Verfahren zum Ausbringen von Spritzflüssigkeit mit einem landwirtschaftlichen Spritzgerät nach einer der vorstehend beschriebenen Ausführungsformen ausgeführt.

In einer bevorzugten Ausführungsform des erfindungsgemäßen Verfahrens umfasst das Verändern des Auftreffbereichs der von einer oder mehreren Ausbringelementen abgegebenen Spritzflüssigkeit auf die landwirtschaftliche Nutzfläche während des Ausbringvorgangs das Verändern der Position von einem oder mehreren Ausbringelementen an dem Spritzgestänge und/oder das Verändern der Neigung von einem oder mehreren Ausbringelementen an dem Spritzgestänge. Alternativ oder zusätzlich umfasst das Verändern des Auftreffbereichs der von einer oder mehreren Ausbringelementen abgegebenen Spritzflüssigkeit auf die landwirtschaftliche Nutzfläche während des Ausbringvorgangs das Verändern der Drehausrichtung von einem oder mehreren Ausbringelementen an dem Spritzgestänge und/oder das Verändern des Spritzmusters von einem oder mehreren Ausbringelementen. Das Verändern der Position kann ein Verschieben von einem oder mehreren Ausbringelementen, insbesondere entlang des Spritzgestänges und/oder quer zur Fahrtrichtung des landwirtschaftlichen Spritzgeräts, umfassen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Spritzgestänge eines erfindungsgemäßen landwirtschaftlichen Spritzgeräts in einer schematischen Darstellung;
- Fig. 2: ein Spritzgestänge eines anderen erfindungsgemäßen landwirtschaftlichen Spritzgeräts in einer schematischen Darstellung; und
- Fig. 3: ein Spritzgestänge eines weiteren erfindungsgemäßen landwirtschaftlichen Spritzgeräts in einer schematischen Darstellung.

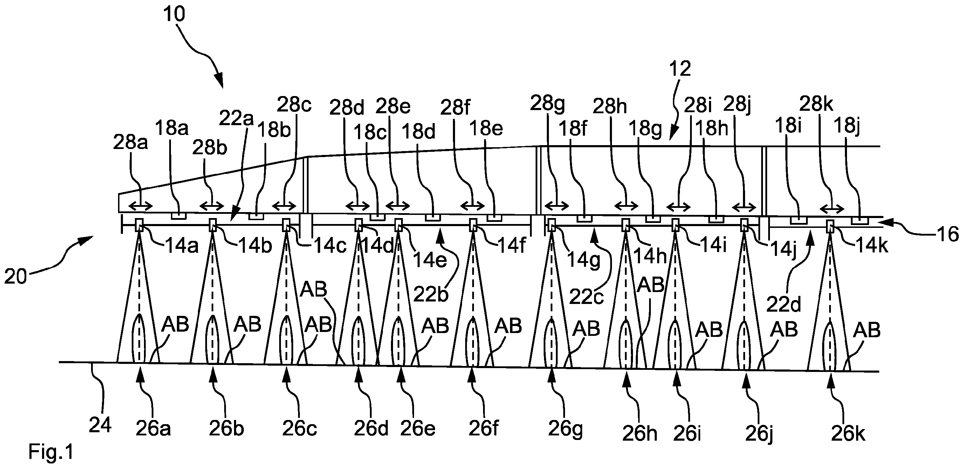

Die Fig. 1 zeigt ein Spritzgestänge 12 eines landwirtschaftlichen Spritzgeräts 10, wobei das landwirtschaftliche Spritzgerät 10 als Feldspritze ausgebildet ist. Das Spritzgestänge 12 weist mehrere zueinander verschwenkbare Gestängesegmente auf, welche ein Zusammenklappen des Spritzgestänges 12 erlauben. Der dargestellte Ausschnitt des Spritzgestänges 12 zeigt eine linke Gestängehälfte, wobei das Spritzgestänge 12 ebenfalls eine rechte Gestängehälfte aufweist.

An dem Spritzgestänge 12 sind mehrere Ausbringelemente 14a-14k angeordnet, wobei die Ausbringelemente 14a-14k als Spritzdüsen ausgebildet sind. Die Ausbringelemente 14a-14k dienen zum Ausbringen der Spritzflüssigkeit auf die landwirtschaftliche Nutzfläche 24.

Ferner umfasst das landwirtschaftliche Spritzgerät 10 eine Erfassungseinrichtung 16, welche zum Erfassen von Pflanzenreihen 26a-26k auf der landwirtschaftlichen Nutzfläche 24 dient. Die Erfassungseinrichtung 16 umfasst mehrere an dem Spritzgestänge 12 befestigte Kameras 18a-18j.

Darüber hinaus umfasst das landwirtschaftliche Spritzgerät 10 eine Verstelleinrichtung 20, mittels welcher der Auftreffbereich AB der von den Ausbringelementen 14a-14k abgegebenen Spritzflüssigkeit auf der landwirtschaftlichen Nutzfläche 24 während des Ausbringvorgangs veränderbar ist.

Die Ausbringelemente 14a-14k, die Kameras 18a-18j der Erfassungseinrichtung 16 und die Verstelleinrichtung 20 sind mit einer Steuerungseinrichtung verbunden, welche die Verstelleinrichtung 20 in Abhängigkeit der durch die Erfassungseinrichtung 16 erfassten Pflanzenreihen 26a-26k auf der landwirtschaftlichen Nutzfläche 24 während des Ausbringvorgangs steuert.

Die Verstelleinrichtung 20 weist mehrere Positioniereinrichtungen 22a-22d auf, mittels welchen die Position der Ausbringelemente 14a-14k an dem Spritzgestänge 12 veränderbar ist. Die Positioniereinrichtungen 20a-20d weisen jeweils einen Verschiebemechanismus auf, mittels welchem mehrere Ausbringelemente 14a-14k entlang des Spritzgestänges 12 und somit quer zur Fahrtrichtung des landwirtschaftlichen Spritzgeräts 10 verschiebbar sind. Der Verschiebemechanismus der jeweiligen Positioniereinrichtungen 22a-22d erlaubt eine Einzelpositionierung der jeweiligen Ausbringelemente 14a-14k. Die Ausbringelemente 14a-14k können dabei unabhängig voneinander in die dargestellten Verstellrichtungen 28a-28k bewegt werden. Zum Bewegen der Ausbringelemente 14a-14k weisen die Positioniereinrichtungen 22a-22d entsprechende Aktoren auf. Die Aktoren können elektrische, pneumatische oder hydraulische Aktoren sein.

Mittels der Steuerungseinrichtung können die Positioniereinrichtungen 22a-22d derart angesteuert werden, dass die Ausbringelemente 14a-14k während des Ausbringvorgangs jeweils im Wesentlichen vertikal oberhalb einer Pflanzenreihe 26a-26k positioniert sind. Dies erlaubt eine präzise reihenbezogene Ausbringung der Flüssigkeit auf die landwirtschaftliche Nutzfläche 24.

Alternativ oder zusätzlich zu der dargestellten Steuerung der Positioniereinrichtungen 22a-22d kann diese auch derart gesteuert werden, dass die Ausbringelemente 14a-14k während des Ausbringvorgangs jeweils oberhalb und im Wesentlichen mittig zwischen zwei Pflanzenreihen 26a-26k positioniert sind.

Ferner kann mittels der Verstelleinrichtung auch das Spritzmuster der Ausbringelemente 14a-14k angepasst werden. Die Verstelleinrichtung 20 kann hierzu verstellbare oder auswechselbare Düsenaufsätze aufweisen, welche in Abhängigkeit der Position bzw. des Verlaufs der erfassten Pflanzenreihen 26a-26k an den jeweiligen Ausbringelementen 14a-14k eingestellt werden können.

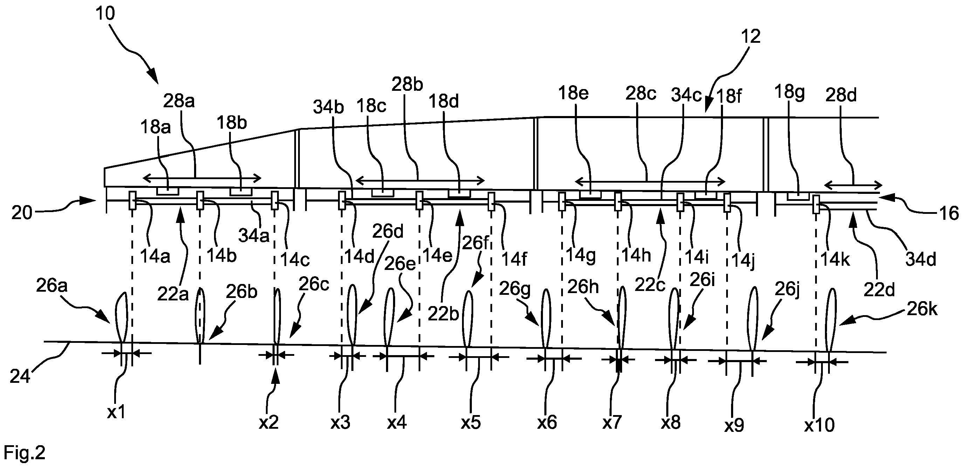

Die Fig. 2 zeigt ebenfalls ein Spritzgestänge 12 eines als Feldspritze ausgebildeten landwirtschaftlichen Spritzgeräts 10. Anders als die Verstelleinrichtung 20 des in der Fig. 1 dargestellten Spritzgeräts 10 sind jeweils mehrere Ausbringelemente 14a-14k an einer Trägerstruktur 34a-34d befestigt, wobei die Position der Trägerstrukturen 34a-34d mittels der Verstelleinrichtung 20 veränderbar ist. Konkret sind die Trägerstrukturen 34a-34d in den Verstellrichtungen 28a-28d quer zur Fahrtrichtung verschiebbar. Das Bewegen der Trägerstrukturen 34a-34d wird mittels entsprechender Aktoren des landwirtschaftlichen Spritzgeräts 10 umgesetzt.

Die Ausbringelemente 14a-14k sind als Spritzdüsen ausgebildet. Die Trägerstrukturen 34a-34d sind als Düsenträgereinheiten ausgebildet. Die Ausbringelemente 14a-14k, welche jeweils an einer Trägerstruktur 34a-34d befestigt sind, weisen eine unveränderliche Relativposition zueinander auf. Da die Ausbringelemente 14a-14k unbeweglich an den jeweiligen Trägerstrukturen 34a-34d befestigt sind, ist trotz der Verschiebbarkeit der Trägerstrukturen 34a-34d in Querrichtung keine exakte Positionierung der Ausbringelemente 14a-14k oberhalb der Pflanzenreihen 26a-26k möglich. Damit die Ausbringung der Spritzflüssigkeit trotzdem mit einem akzeptablen Reihenbezug erfolgt, ist die Steuerungseinrichtung dazu eingerichtet, die Verstelleinrichtung 20 derart zu steuern, dass der mittlere Abstand in horizontaler Richtung zwischen den erfassten Pflanzenreihen 26a-26k und den den Pflanzenreihen 26a-26k jeweils zugeordneten Ausbringelementen 14a-14k minimal ist. Somit wird auch die Summe der Abstände x1-x10 zwischen den erfassten Pflanzenreihen 26a-26k und den den Pflanzenreihen 26a-26k jeweils zugeordneten Ausbringelementen 14a-14k minimiert.

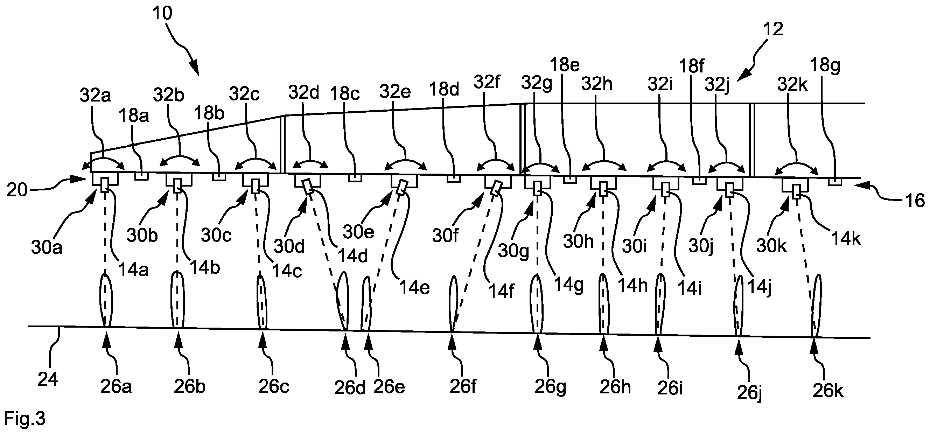

Die Fig. 3 zeigt ebenfalls einen Ausschnitt eines Spritzgestänges 12 eines landwirtschaftlichen Spritzgeräts 10. Die Verstelleinrichtung 20 des dargestellten landwirtschaftlichen Spritzgeräts 10 weist mehrere Schwenkeinrichtungen 30a-30k auf, mittels welchen jeweils die Neigung der Ausbringelemente 14a-14k an dem Spritzgestänge 12 veränderbar ist. Mittels der Schwenkeinrichtungen 30a-30k kann die Neigung der einzelnen Ausbringelemente 14a-14k unabhängig voneinander eingestellt werden. Die jeweiligen Schwenkeinrichtungen 30a-30k weisen Aktoren auf, mittels welchen die Ausbringelemente 14a-14k entlang der Schwenkrichtungen 32a-32k verschwenkbar sind.

Die Steuerungseinrichtung des landwirtschaftlichen Spritzgeräts 10 ist in dem dargestellten Ausführungsbeispiel dazu eingerichtet, die Schwenkeinrichtungen 30a-30k derart zu steuern, dass die Ausbringelemente 14a-14k während des Ausbringvorgangs jeweils im Wesentlichen auf eine Pflanzenreihe 26a-26k ausgerichtet sind.

Alternativ oder zusätzlich kann die Steuerungseinrichtung jedoch auch dazu eingerichtet sein, die Schwenkeinrichtungen 30a-30k derart zu steuern, dass die Ausbringelemente 14a-14k während des Ausbringvorgangs jeweils auf einen Bereich zwischen zwei Pflanzenreihen 26a-26k ausgerichtet sind.

Die in den Fig. 1 bis Fig. 3 dargestellten Verstellmöglichkeiten zum Verstellen des Auftreffbereichs AB der von den Ausbringelementen 14a-14k abgegebenen Spritzflüssigkeit können auch miteinander kombiniert werden. So kann eine Verstelleinrichtung 20 neben Positioniereinrichtungen 22a-22d zur Längsverschiebung der Ausbringelemente 14a-14k in Querrichtung gleichzeitig auch Schwenkeinrichtungen 30a-30k aufweisen, mittels welchen die Neigung der Ausbringelemente 14a-14k während des Ausbringvorgangs veränderbar ist.

### Bezugszeichen

- 10: landwirtschaftliches Spritzgerät
- 12: Spritzgestänge
- 14a-14k: Ausbringelemente
- 16: Erfassungseinrichtung
- 18a-18j: Kameras
- 20: Verstelleinrichtung
- 22a-22d: Positioniereinrichtungen
- 24: landwirtschaftliche Nutzfläche
- 26a-26k: Pflanzenreihen
- 28a-28k: Verstellrichtungen
- 30a-30k: Schwenkeinrichtungen
- 32a-32k: Schwenkrichtungen
- 34a-34d: Trägerstruktur

- AB: Auftreffbereiche
- x1-x10: Abstände

## Patentansprüche

1. Verfahren zum Ausbringen von Spritzflüssigkeit auf einer landwirtschaftlichen Nutzfläche (24) mit einem landwirtschaftlichen Spritzgerät (10) mit den Schritten:
- Ausbringen von Spritzflüssigkeit auf eine landwirtschaftliche Nutzfläche (24) mittels mehrerer Ausbringelemente, welche an einem Spritzgestänge (12) angeordnet sind;
- Erfassen von Pflanzenreihen (26a-26k) auf der landwirtschaftlichen Nutzfläche (24) mittels einer Erfassungseinrichtung (16); und
- Verändern des Auftreffbereichs (AB) der von einer oder mehreren Ausbringelementen (14a-14k) abgegebenen Spritzflüssigkeit auf die landwirtschaftliche Nutzfläche (24) während des Ausbringvorgangs mittels einer Verstelleinrichtung (20);
**gekennzeichnet durch** den Schritt:
- Steuern der Verstelleinrichtung (20) in Abhängigkeit der durch die Erfassungseinrichtung (16) erfassten Pflanzenreihen (26a-26k) auf der landwirtschaftlichen Nutzfläche (24) während des Ausbringvorgangs, so dass einzelne oder mehrere Ausbringelemente (14a-14k) während des Ausbringvorganges im Wesentlichen vertikal oberhalb einer Pflanzenreihe (26a-26k) positioniert sind und der mittlere Abstand in horizontaler Richtung zwischen den erfassten Pflanzenreihen (26a-26k) und den den Pflanzenreihen (26a-26k) jeweils zugeordneten Ausbringelementen (14a-14k) minimal ist.

2. Verfahren nach Anspruch 1,
**dadurch gekennzeichnet, dass** das Verändern des Auftreffbereichs (AB) der von einer oder mehreren Ausbringelementen (14a-14k) abgegebenen Spritzflüssigkeit auf die landwirtschaftliche Nutzfläche (24) während des Ausbringvorgangs zumindest einen der folgenden Schritte umfasst:
- Verändern der Position von einem oder mehreren Ausbringelementen (14a-14k) an dem Spritzgestänge (12);
- Verändern der Neigung von einem oder mehreren Ausbringelementen (14a-14k) an dem Spritzgestänge (12);
- Verändern der Drehausrichtung von einem oder mehreren Ausbringelementen (14a-14k) an dem Spritzgestänge (12);
- Verändern des Spritzmusters von einem oder mehreren Ausbringelementen (14a-14k).

3. Verfahren nach Anspruch 2,
**dadurch gekennzeichnet, dass** das Verändern der Neigung von einem oder mehreren Ausbringelementen (14a-14k) an dem Spritzgestänge (12) eine Neigungsanpassung umfasst derart, dass einzelne Ausbringlemente auf erfasste Pflanzenreihen auf der landwirtschaftlichen Nutzfläche ausgerichtet sind oder dass Ausbringlemente auf Zwischenbereiche zwischen benachbarte Pflanzenreihen ausgerichtet sind.

4. Verfahren nach Anspruch 2,
**dadurch gekennzeichnet, dass** das Verändern der Drehausrichtung von einem oder mehreren Ausbringelementen (14a-14k) an dem Spirztgestänge (12) das Verdrehen eines oder mehrerer Ausbringelemente (14a-14k) um die eigene Hochachse umfasst.

## Claims

1. Method for applying spray liquid onto an agricultural area (24) using an agricultural sprayer (10), comprising the steps of:
- applying spray liquid onto an agricultural area (24) by means of several application elements, which are arranged on a spray boom (12);
- detecting plant rows (26a-26k) on the agricultural area (24) by means of a detection device (16); and
- changing, by means of an adjusting device (20), the application area (AB) of the spray liquid dispensed by one or more application elements (14a-14k) onto the agricultural area (24) during the application process;
**characterized by** the step of:
- controlling the adjusting device (20) as a function of the plant rows (26a-26k) detected on the agricultural area (24) by the detection device (16) during the application process, so that, during the application process, individual or multiple application elements (14a-14k) are positioned essentially vertically above a plant row (26a-26k), and the average distance in the horizontal direction between the detected plant rows (26a-26k) and the application elements (14a-14k) respectively assigned to the plant rows (26a-26k) is minimal.

2. Method according to claim 1,
**characterized in that** changing the application area (AB) of the spray liquid dispensed by one or more application elements (14a-14k) onto the agricultural area (24) during the application process comprises at least one of the following steps:
- changing the position of one or more application elements (14a-14k) on the spray boom (12);
- changing the inclination of one or more application elements (14a-14k) on the spray boom (12);
- changing the rotational orientation of one or more application elements (14a-14k) on the spray boom (12);
- changing the spray pattern of one or more application elements (14a-14k).

3. Method according to claim 2,
**characterized in that** changing the inclination of one or more application elements (14a-14k) on the spray boom (12) comprises an inclination adjustment such that individual application elements are aligned with detected plant rows on the agricultural area, or that application elements are aligned with intermediate regions between adjacent plant rows.

4. Method according to claim 2,
**characterized in that** changing the rotational orientation of one or more application elements (14a-14k) on the spray boom (12) comprises rotating one or more application elements (14a-14k) about their own vertical axis.

## Revendications

1. Procédé d'application de liquide de pulvérisation sur une surface agricole utile (24) avec un appareil de pulvérisation agricole (10) comprenant les étapes :
- d'application de liquide de pulvérisation sur une surface agricole utile (24) au moyen de plusieurs éléments d'application, qui sont agencés sur une rampe de pulvérisation (12) ;
- de détection de rangées de plantes (26a-26k) sur la surface agricole utile (24) au moyen d'un dispositif de détection (16) ; et
- de modification de la zone d'impact (AB) du liquide de pulvérisation fourni par le ou les éléments d'application (14a-14k) sur la surface agricole utile (24) pendant le processus d'application au moyen d'un dispositif de réglage (20) ;
**caractérisé par** l'étape :
- de commande du dispositif de réglage (20) en fonction des rangées de plantes (26a-26k) détectées par le dispositif de détection (16) sur la surface agricole utile (24) pendant le processus d'application, de sorte que des éléments d'application individuels ou multiples (14a-14k) soient positionnés pendant le processus d'application essentiellement à la verticale au-dessus d'une rangée de plantes (26a-26k) et que la distance moyenne dans la direction horizontale entre les rangées de plantes (26a-26k) détectées et les éléments d'application (14a-14k) respectivement attribués aux rangées de plantes (26a-26k) soit minime.

2. Procédé selon la revendication 1,
**caractérisé en ce que** la modification de la zone d'impact (AB) du liquide de pulvérisation fourni par le ou les éléments d'application (14a-14k) sur la surface agricole utile (24) pendant le processus d'application comprend au moins une des étapes suivantes :
- modification de la position d'un ou plusieurs éléments d'application (14a-14k) sur la rampe de pulvérisation (12) ;
- modification de l'inclinaison d'un ou plusieurs éléments d'application (14a-14k) sur la rampe de pulvérisation (12) ;
- modification de la direction de rotation d'un ou plusieurs éléments d'application (14a-14k) sur la rampe de pulvérisation (12) ;
- modification du motif de pulvérisation d'un ou plusieurs éléments d'application (14a-14k).

3. Procédé selon la revendication 2,
**caractérisé en ce que** la modification de l'inclinaison d'un ou plusieurs éléments d'application (14a-14k) sur la rampe de pulvérisation (12) comprend une adaptation de l'inclinaison de sorte que des éléments d'application individuels soient dirigés vers les rangées de plantes détectées sur la surface agricole utile ou que les éléments d'application soient dirigés vers des zones intermédiaires entre des rangées de plantes voisines.

4. Procédé selon la revendication 2,
**caractérisé en ce que** la modification de la direction de rotation d'un ou plusieurs éléments d'application (14a-14k) sur la rampe de pulvérisation (12) comprend la rotation d'un ou plusieurs éléments d'application (14a-14k) autour de leur propre axe vertical.
